# EUROPÄISCHE PATENTANMELDUNG

(11) **EP 2 327 629 A1**
(43) Veröffentlichungstag der Anmeldung: **01.06.2011**
(21) Anmeldenummer: 09177090.9
(22) Anmeldetag: 25.11.2009
(51) Int. Cl.: B64D 47/04, B64D 47/06

(54) **Flugzeugtragflächenleuchte**

(71) Anmelder: Goodrich Lighting Systems GmbH, 59557 Lippstadt (DE)
(72) Erfinder: Ferling, Sonja, 33098, Paderborn (DE); Wernicke, Alexander, 59555, Lippstadt (DE); Beier, Enrico, 59557, Lippstadt (DE); Hessling, Andre, 56179, Vallendar (DE)
(74) Vertreter: von Kreisler Selting Werner

(57) **Zusammenfassung**

Die Flugzeugtragflächenleuchte (12) ist an dem Ende (14) eines Tragflächenflügels (16) angeordnet und mit Leuchtmitteln zum Abstrahlen von Licht in einem Raumwinkelbereich (26) mit einer optischen Mittelachse (22), die bezogen auf die Flugrichtung des Flugzeuges (10) schräg nach vorn und zur Seite gerichtet ist, versehen. Diese Leuchtmittel umfassen erste LED-Leuchtmittel (38) zur Ausleuchtung in einem von der optischen Achse (22) aus betrachtet nach vorn und oben gerichteten ersten Raumwinkelteilbereich (28), zweite LED-Leuchtmittel (40) zur Ausleuchtung in einem von der optischen Achse (22) aus betrachtet nach vorn unten gerichteten zweiten Raumwinkelteilbereich (30), dritte LED-Leuchtmittel (42) zur Ausleuchtung in einem von der optischen Achse (22) aus betrachtet nach hinten und unten gerichteten dritten Raumwinkelteilbereich (32), und vierte LED-Leuchtmittel (44) zur Ausleuchtung in einem von der optischen Achse (22) aus betrachtet nach hinten und oben gerichteten vierten Raumwinkelteilbereich (34). Die LED-Leuchtmittel (38,40,42,44), werden von einer Ansteuereinheit (46) angesteuert. Die Ansteuereinheit (46) steuert in einem im Flugbetrieb aktivierbaren ersten Betriebsmodus sämtliche vier LED-Leuchtmittel (38,40,42,44) zur Erzeugung von Blitzlicht als Warnlicht an, während sie in einem beim Fahren des Flugzeuges (10) auf einem Untergrund aktivierbaren zweiten Betriebsmodus das zweite LED-Leuchtmittel (40) zur Erzeugung von Dauerlicht zwecks Ausleuchtung eines seitlich des Flugzeugs (10) gelegenen Abbiegebereichs ansteuert.

## Beschreibung

Die Erfindung betrifft eine Flugzeugtragflächenleuchte sowie ein Flugzeug mit zwei derartigen Leuchten an den gegenüberliegenden Enden seiner Tragflächenflügel.

Flugzeuge sind im Außenbereich mit einer Vielzahl von (Warn-) Leuchten versehen. Neben Warnleuchten oben und unten am Flugzeugrumpf existieren weitere Warnieuchten an bzw. in den Tragflächenflügeln, In den Tragflächenflügeln können bis zu sechs verschiedene Beleuchtungsfunktionen integriert sein, und zwar in unterschiedlicher Beleuchtungstechnik. Zu diesen Beleuchtungsfunktionen gehören ein im Wesentlichen vorwärts gerichtetes Blitzlicht (auch "white strobe" genannt) eine leistungsstarke Landungsleuchtenfunktion in Halogen- oder Gasentladungstechnik, eine Kurvenleuchte für das Ausleuchten beim Abbiegen vorn Rollfeld, Positionsleuchten und unter Umständen eine Randmarkierungsleuchte, die das äußere Ende des Flügels markiert, sowie eine Rollscheinwerferfunktion, Aktuell findet in der Luftfahrtindustrie ein Trend zu LEDs als Leuchtmittel statt, Diese Leuchtmittel haben erhöhte Anforderungen an die Kühlung und die elektrische Ansteuerung und können damit einen Anschaffungskosten- und Gewichtsnachteil gegenüber konventioneller Technik aufweisen. Demgegenüber wirkt sich aber der gegenüber herkömmliche Leuchtmittel reduzierte Wartungsaufwand vorteilhaft aus. Dies wiederum ist für Luftfahrtgesellschaften von großer Bedeutung.

Aufgabe der Erfindung ist es, eine Flugzeugtragflächenleuchte zu schaffen, bei der mehrere Beleuchtungsfunktionen zusammengefasst sind, so dass Kosten und Gewicht reduziert werden können.

Zur Lösung dieser Aufgabe wird mit der Erfindung eine Flugzeugtragflächenleuchte zur Anordnung an dem Ende eines Tragflächenflügels eines Flugzeuges vorgeschlagen, wobei die Flugzeugtragflächenleuchte versehen ist mit
- Leuchtmitteln zum Abstrahlen von Licht in einem Raumwinkelbereich mit einer optischen Mittelachse, die bezogen auf die Flugrichtung des Flugzeuges schräg nach vorn und zur Seite gerichtet ist,
- wobei die Leuchtmittel umfassen
- erste LED-Leuchtmittel zur Ausleuchtung in einem von der optischen Achse aus betrachtet nach vorn und oben gerichteten ersten Raumwinkelteilbereich,
- zweite LED-Leuchtmittel zur Ausleuchtung in einem von optischen Achse aus betrachtet nach vorn unten gerichteten zweiten Raumwinkelteilbereich,
- dritte LED-Leuchtmittel zur Ausleuchtung in einem von der optischen Achse aus betrachtet nach hinten und unten gerichteten dritten Raumwinkelteilbereich, und
- vierte LED-Leuchtmittel zur Ausleuchtung in einem von der optischen Achse aus betrachtet nach hinten und oben gerichteten vierten Raumwinkelteilbereich, und
- einer Ansteuereinheit zur Ansteuerung der LED-Leuchtmittel,
- wobei die Ansteuereinheit in einem im Flugbetrieb aktivierbaren ersten Betriebsmodus sämtliche vier LED-Leuchtmittel zur Erzeugung von Blitzlicht als Warnlicht ansteuert und
- wobei die Ansteuereinheit in einem beim Fahren des Flugzeuges auf einem Untergrund aktivierbaren zweiten Betriebsmodus das zweite LED-Leuchtmittel zur Erzeugung von Dauerlicht zwecks Ausleuchtung eines seitlich des Flugzeugs gelegenen Abbiegebereichs ansteuert.

Die erfindungsgemäße Flugzeugtragflächenleuchte nutzt LEDs als Beleuchtungstechnik und strahlt Licht in einem Raumwinkelbereich ab, dessen optische Mittenachse bezogen auf die Flugrichtung des Flugzeuges schräg nach vorn und zur Seite gerichtet ist. Der Raumwinkelbereich ist insbesondere kegelförmig und weist vier Raumwinkelteilbereiche auf, Die Ausleuchtung jedes Raumwinkelteilbereichs erfolgt durch LED-Leuchtmittel, wobei ein erstes LED-Leuchtmittel zur Ausleuchtung eines von der optischen Achse aus betrachtet nach vorn und oben gerichteten ersten Raumwinkelteilbereichs und ein zweites LED-Leuchtmittel zur Ausleuchtung eines von der optischen Achse betrachtet nach vorn und unten gerichteten zweiten Raumwinkelteilbereichs vorgesehen ist. Ein dritter Raumwinkelteilbereich, der von der optischen Achse aus betrachtet nach hinten und unten gerichtet ist, wird durch ein drittes LED-Leuchtmittel ausgeleuchtet, während die Ausleuchtung in einem von der optischen Achse aus betrachtet nach hinten und oben gerichteten vierten Raumwinkelteilbereich durch ein viertes LED-Leuchtmittel erfolgt, Sämtliche vier Leuchtmittel können zusammen und getrennt im Dauerlicht oder als Blitzlicht betrieben werden.

Die Ansteuerung der einzelnen LED-Leuchtmittel erfolgt durch eine Ansteuereinheit. Je nach Betriebsmodus des Flugzeuges werden sämtliche oder einzelne LED-Leuchtmittel im Blitzlicht- oder Dauerlichtmodus angesteuert. So ist erfindungsgemäß vorgesehen, dass die Ansteuereinheit in einem im Flugbetrieb aktivierbaren ersten Betriebsmodus sämtliche vier LED-Leuchtmittel zur Erzeugung von Blitzlicht als Warnlicht ansteuert und zwar vorzugsweise mit kurzzeitig maximaler Leistung. In diesem Betriebsmodus übernimmt die erfindungsgemäße Flugzeugtragflächenleuchte die Funktion des bekannten, nach vorn und zur Seite gerichteten Blitzlichts ("white strobe"). Beim Fahren bzw. Rollen des Flugzeuges auf einem Untergrund werden das erste, das dritte und das vierte LED-Leuchtmittel nicht aktiviert. Das zweite LED-Leuchtmittel dient beim Rollen des Flugzeuges auf einem Untergrund (zweiter Betriebsmodus) zur Erzeugung von Dauerlicht zwecks Ausleuchtung eines seitlich des Flugzeuges gelegenen Abbiegebereichs, Im zweiten Betriebsmodus übernimmt die erfindungsgemäße Flugzeugtragflächenleuchte also die Funktion des Kurvenlichts beim Abbiegen beispielsweise vorn Rollfeld. Das Dauerlicht kann mit maximaler Leistung abgegeben werden, so dass der Abbiegebereich maximal ausgeleuchtet ist. Eine Reduktion der Lichtintensität durch entsprechende Ansteuerung des zweiten LED-Leuchtmittels ist möglich. Im zweiten Betriebsmodus kann die Zeit, für die das Dauerlicht der zweiten LED-Leuchtmittel aktiviert ist, auf die Dauer des Abbiegevorgangs beschränkt sein.

Mit der erfindungsgemäßen Flugzeugtragflächenleuchte lässt sich in vorteilhafter Weise in einem weiteren dritten Betriebsmodus die Funktion der optischen Markierung des Endes des Tragflächenflügels realisieren. In diesem dritten Betriebsmodus befindet sich das Flugzeug in seiner Parkposition, wobei das dritte LED-Leuchtmittel gedimmtes Dauerlicht abgibt,

Zusätzlich ist es noch möglich, eine weitere Beleuchtungsfunktion, nämlich das Positions- und/oder Navigationslicht in die erfindungsgemäße Flugzeugtragflächenleuchte zu integrieren. Hierzu ist die Flugzeugtragflächenleuchte zweckmäßigerweise am Ende des Tragflächenflügels angeordnet.

Sämtliche LED-Leuchtmittel sind zweckmäßigerweise in einem gemeinsamen Gehäuse mit einer Lichtaustrittsöffnung untergebracht. Dieses Gehäuse kann auch durch die Flügelkonstruktion definiert sein, indem diese eine Aufnahme aufweist, in die die LED-Leuchtmittel eingesetzt sind. Die Lichtaustrittsöffnung ist herkömmlich mit einer für das Licht der LED-Leuchtmittel transparenten Abdeckplatte (sogenannte Lichtscheibe) verschlossen.

Die erfindungsgemäße Flugzeugtragflächenleuchte vereinigt mehrere Vorteile in sich. Bezüglich des Einbaus und der Montage ist es von Vorteil, dass lediglich eine Einheit montiert werden muss, mit der mehrere Beleuchtungsfunktionen realisiert werden können. Die eingesetzten LED-Leuchtmittel werden mehrfach verwendet, um nämlich die unterschiedlichen Beleuchtungsfunktionen zu realisieren. Durch die LED-Leuchtmittel ist der Wartungsaufwand reduziert. Trotz Verwendung von LED-Leuchtmitteln, die anders als herkömmliche Beleuchtungstechniken einer (stärkeren) Kühlung bedürfen, steigt das Gesamtgewicht der erfindungsgemäßen Flugzeugtragflächenleuchte nicht übermäßig stark an, da, wie bereits oben erwähnt, die einzelnen LED-Leuchtmittel für mehrere Beleuchtungsfunktionen Verwendung finden.

Die Erfindung wird nachfolgend anhand eines Ausführungsbeispiels und unter Bezugnahme auf die Zeichnung näher erläutert. Im Einzelnen zeigen dabei:
- Fig. 1: ein Flugzeug in Seitenansicht zur Verdeutlichung der Abstrahlcharakteristik der Flugzeugtragflächenleuchte,
- Fig. 2: ein Flugzeug in Vorderansicht zur Verdeutlichung der Abstrahlcharakteristik der Flugzeugtragflächenleuchte,
- Fig. 3: ein Flugzeug in der Draufsicht mit dargestellter Abstrahlcharakteristik der Flugzeugtragflächenleuchte,
- Fig. 4: perspektivisch eine Flugzeugtragflächenleuchte, wobei ebenfalls die einzelnen Raumwinkelteilbereiche, in die die LED-Leuchtmittel Licht abstrahlen, verdeutlicht sind, und
- Fig. 5: eine vergrößerte Darstellung des Bereichs V in Fig. 4 am Tragflächenende zur schematischen Darstellung des Aufbaus eines Ausführungsbeispiels der Flugzeugtragflächenleuchte und der Anordnung der einzelnen LED-Leuchtmittel.

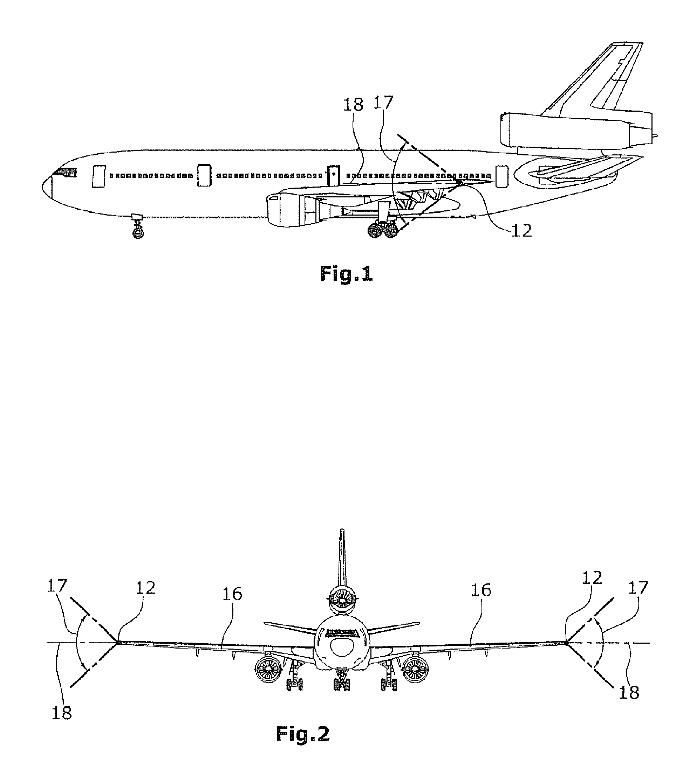

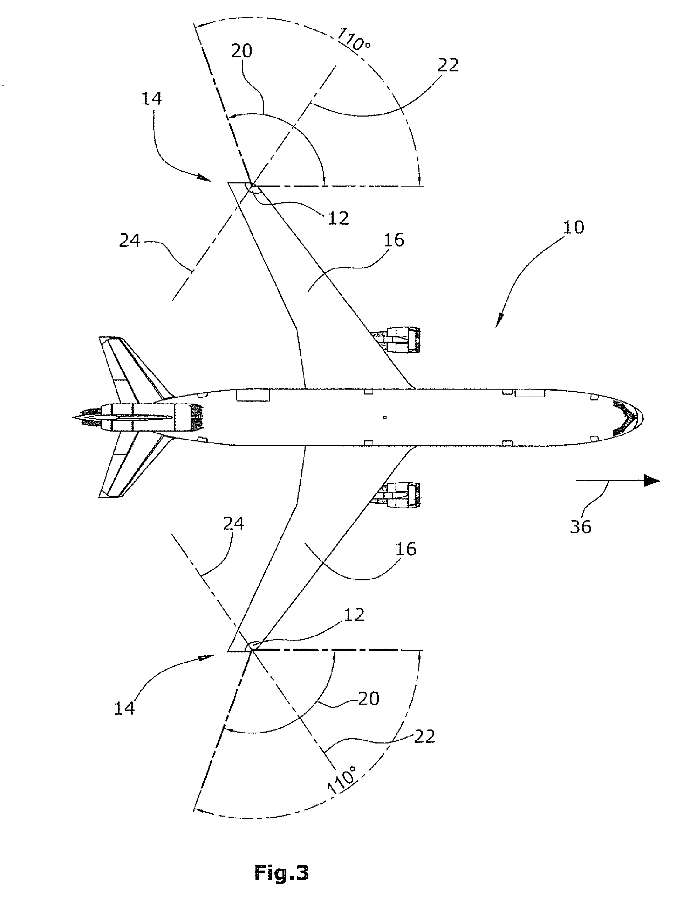

In den Fign. 1 bis 4 ist jeweils ein Flugzeug in verschiedenen Ansichten gezeigt, das neben diversen, nicht dargestellten Außenbeleuchtungsfunktionen auch über Flugzeugtragflächenleuchten 12 an den Enden 14 der Flugzeugtragflächenflügel 16 verfügt. Der vertikale Abstrahlwinkel 17 oberhalb und unterhalb der Horizontalen 18 ist in die Fign. 1 und 2 gezeigt, während Fig. 3 den Abstrahlwinkel 20 relativ zu einer durch die optische Mittelachse 22 des Abstrahlkegels der Flugzeugtragflächenleuchte 12 verlaufenden vertikalen Ebene 24 zeigt.

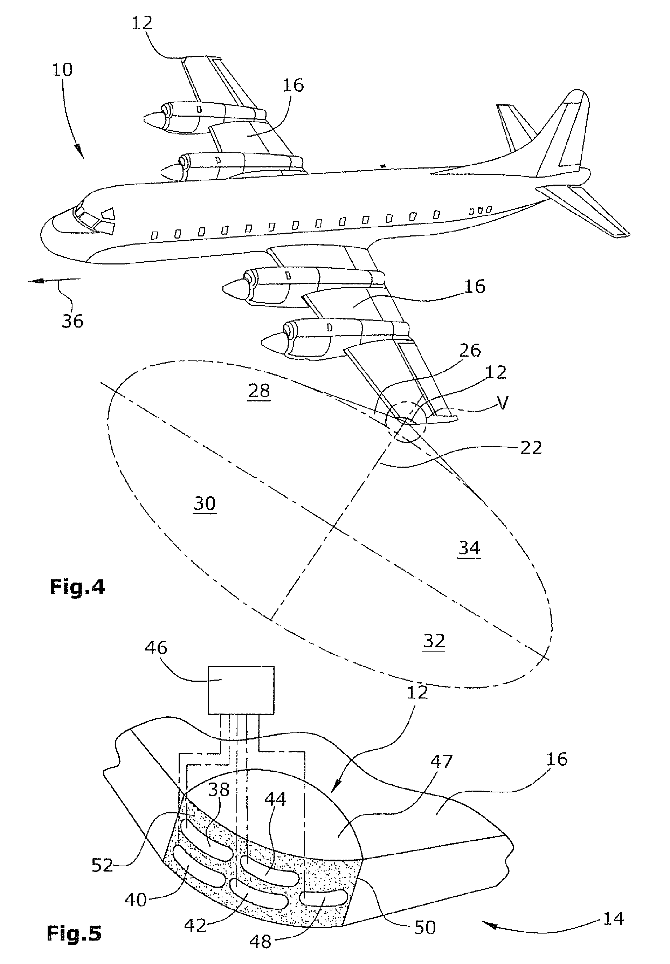

Wie anhand von Fig. 4 zu erkennen ist, ist der ausgeleuchtete, im Wesentlichen kegelförmige Raumwinkelbereich 26 in vier Teilbereiche 28,30,32 und 34 unterteilt. Der Raumwinkelbereich 26 ist bezogen auf die Flugrichtung (siehe Pfeile 36) schräg nach vorn und zur Seite gerichtet. Dadurch entsteht ein erster Raumwinkelteilbereich 28, der nach vorne und oben gerichtet ist, sowie ein zweiter Raumwinkelteilbereich 30, der nach vorne und unten gerichtet ist. Der Raumwinkelbereich 26 umfasst ferner den dritten Raumwinkelteilbereich 32, der bezogen auf die optische Achse 22 nach hinten und unten gerichtet ist, sowie den vierten Raumwinkelteilbereich 34, der bezogen auf die optische Achse 22 nach hinten und oben gerichtet ist.

Die Flugzeugtragflächenleuchte 12 weist erste, zweite , dritte und vierte LED-Leuchtmittel 38,40,42 bzw. 44 auf, die jeweils den Raumwinkeitellbereichen 28,30,32 bzw. 34 zugeordnet sind. Die vier LED-Leuchtmittel 38,40,42,44 werden von einer Ansteuereinheit 46 angesteuert, und zwar in Abhängigkeit von dem gegenwärtigen Betriebsmodus des Flugzeuges (Flugbetrieb, Roll- bzw. Fahrbetrieb und Parkposition). Die Ansteuerung der LED-Leuchtmittel erfolgt beispielsweise auf einen Befehl vorn Cockpit hin.

Die Flugzeugtragflächenleuchte 12 umfasst ein Gehäuse 47, das in das Ende 14 des Tragflächenflügels 16 eingebaut ist. Zusätzlich kann in dem Gehäuse 47 auch noch ein weiteres fünftes LED-Leuchtmittel 48 zur Realisierung des Positions- bzw. Navigationslichts integriert sein. Das Gehäuse 47 weist eine Lichtaustrittsöffnung 50 mit einer diese verschließenden transparenten Abdeckplatte 52 auf.

Während des Flugbetriebs (erster Betriebsmodus) erzeugt die Flugzeugtragflächenleuchte 12 innerhalb des gesamten ausgeleuchteten Raumwinkelbereich 24 Blitzlicht, das eine Warnlichtfunktion für entgegenkommende Flugzeuge bildet, Sämtliche LED-Leuchtmittel 38,40,42 und 44 sind aktiviert. Während des Fahr- bzw. Rollbetriebes (zweiter Betriebsmodus) kann mithilfe des zweiten LED-Leuchtmittels 40 der linke oder rechte Abbiegebereich ausgeleuchtet werden, wenn das Flugzeug 10 z. B. das Rollfeld verlässt oder in das Rollfeld eintritt; die anderen drei LED-Leuchtmittel 38,42,44 sind dabei deaktiviert. Im zweiten Betriebsmodus befindet sich das zweite LED-Leuchtmittel 40 im Dauerlichtbetrieb, der zweckmäßigerweise allerdings nur für die Dauer eines Abbiegevorgangs anhält. In der Parkposition des Flugzeuges 10 (dritter Betriebsmodus) ist lediglich das dritte LED-Leuchtmittel 42 aktiviert, das insbesondere gedimmtes Licht zum Boden hin abgibt und somit eine optische Markierung des Endes 14 eines Tragflächenflügels 16 bildet.

## Patentansprüche

1. Flugzeugtragflächenleuchte (12) zur Anordnung an dem Ende (14) eines Tragflächenflügels (16), mit
- Leuchtmitteln zum Abstrahlen von Licht in einem Raumwinkelbereich (24) mit einer optischen Mittelachse (22), die bezogen auf die Flugrichtung des Flugzeuges (10) schräg nach vorn und zur Seite gerichtet ist,
- wobei die Leuchtmittel umfassen
- erste LED-Leuchtmittel (38) zur Ausleuchtung in einem von der optischen Achse (22) aus betrachtet nach vorn und oben gerichteten ersten Raumwinkelteilbereich (28),
- zweite LED-Leuchtmittel (40) zur Ausleuchtung in einem von der optischen Achse (22) aus betrachtet nach vorn unten gerichteten zweiten Raumwinkelteilbereich (30),
- dritte LED-Leuchtmittel (42) zur Ausleuchtung in einem von der optischen Achse (22) aus betrachtet nach hinten und unten gerichteten dritten Raumwinkelteilbereich (32), und
- vierte LED-Leuchtmittel (44) zur Ausleuchtung in einem von der optischen Achse (22) aus betrachtet nach hinten und oben gerichteten vierten Raumwinkelteilbereich (34), und
- einer Ansteuereinheit (46) zur Ansteuerung der LED-Leuchtmittel (38,40,42,44),
- wobei die Ansteuereinheit (46) in einem im Flugbetrieb aktivierbaren ersten Betriebsmodus sämtliche vier LED-Leuchtmittel (38,40,42,44) zur Erzeugung von Blitzlicht als Warnlicht ansteuert und
- wobei die Ansteuereinheit (46) in einem beim Fahren des Flugzeuges (10) auf einem Untergrund aktivierbaren zweiten Betriebsmodus das zweite LED-Leuchtmittel (40) zur Erzeugung von Dauerlicht zwecks Ausleuchtung eines seitlich des Flugzeugs (10) gelegenen Abbiegebereichs ansteuert.

2. Flugzeugtragflächenleuchte (12) nach Anspruch 1, **dadurch gekennzeichnet, dass** die Ansteuereinheit (46) in einem in einer Parkposition des Flugzeugs (10) aktivierbaren dritten Betriebsmodus das dritte LED-Leuchtmittel (42) zur Erzeugung von gedimmtem Dauerlicht zwecks optischer Markierung des Endes (14) des Tragflächenflügels (16) ansteuert.

3. Flugzeugtragflächenleuchte (12) nach Anspruch 1 oder 2, **dadurch gekennzeichnet, dass** der zweite Betriebsmodus für die Dauer des Fahrens des Flugzeugs (10) auf einem Untergrund oder für im Wesentlichen lediglich die Dauer eines Abbiegevorgangs aktivierbar ist.

4. Flugzeugtragflächenleuchte (12) nach Anspruch 1 bis 3, **gekennzeichnet durch** ein fünftes LED-Leuchtmittel (48) zur Erzeugung von Positions- und/oder Navigationslicht,

5. Flugzeugtragflächenleuchte (12) nach Anspruch 1 bis 4, **dadurch gekennzeichnet, dass** sämtliche LED-Leuchtmittel (38,40,42,44,48) in einem gemeinsamen Gehäuse (47) mit einer Lichtaustrittsöffnung (50) untergebracht sind, die durch eine für das Licht der LED-Leuchtmittel (38,40,42,44,48) transparente Abdeckplatte (52) verschlossen ist.
